# EUROPEAN PATENT APPLICATION

(11) **EP 1 671 828 A1**
(43) Date of publication of application: **21.06.2006**
(21) Application number: 04380260.2
(22) Date of filing: 15.12.2004
(51) Int. Cl.: B60J 7/00

(54) **Roof module for a vehicle with a transparent roof portion**

(71) Applicant: Grupo Antolin Ingenieria, S.A., 09007 Burgos (ES)
(72) Inventor: Santaolalla Gil, Joaquin, 09001 Burgos (ES); Gonzàlez Sàiz, José Ignacio, 09001 Burgos (ES); Sàiz Ausin, Pedro, 09007 Burgos (ES)
(74) Representative: Esteban Perez-Serrano, Maria Isabel

(57) **Abstract**

A roof module for inside a vehicle having a first transparent roof portion (8) and a second sheet metal roof portion (7), the module including: covering elements (1) for covering the first portion (8); support elements (2, 21, 11, 14) for supporting the covering elements (1); operation elements (13) for shifting the covering elements (1) between the extended, withdrawn and intermediate positions. The support elements (2, 21, 11, 14) have: at least one side portion (11) including guide elements (110) for guiding the shifting of the covering elements (1); a rear portion (14) including the rear end (122) of the covering elements (1); a front portion (21) including receiving elements (213) for receiving the front end (12) of the covering elements (1) in the extended position.

## Description

### Field of the Invention

The invention refers to a roof module for vehicles having a transparent roof portion. Said vehicles incorporate a roof portion of glass or of other plastic materials rather than the metal roof.

### Background of the Invention

Several systems relating to modules for roof vehicles including a protection system are known.

Patent document EP 0 203 484 discloses a module and assembly process. The headliner panel supporting the protection system is rigid, as is the transverse support element. Said transverse support element is assembled end to end in the front portion of the rigid headliner panel, it includes sun visors and a rearview mirror. The protection system is a module itself functioning and installed independently in the rigid headliner panel.

Patent document WO 03/026929 shows a transparent roof with a support module formed by several segments, a minimum of two segments. A joining system between segments allowing the continuity in the electrical conduction and conduction of fluids, air, water or others, is protected. The segments can also include devices of different types, such as airbags, electronic devices, etc.

In roofs with a transparent element, a protection system is included inside the vehicle to protect the occupants. The protection system usually has a support frame assembled in an opening in the central area of the roof headliner panel, being necessary to leave a distance between the front edge of the roof and the front portion of said support frame, as well as on the sides, due to structural rigidity reasons. This means that these front and side distances are covered by headliner panel, not being able to take advantage of the corresponding transparent element portion.

### Description of the Invention

To solve this drawback, the front crossbar of the support frame of the protection system is integrated in the front portion of the roof headliner panel, thus extending the opening surface of the protection system, and therefore taking advantage of the transparent surface.

The module of the present invention includes a protection system for roofs with a transparent element such that:
- The front portion or crossbar of the module serves for housing the front portion of the protection system in its extended position.
- The front portion or crossbar of the module stands in for the front crossbar of the protection system, and therefore the side guides of the protection system are directly joined to the front crossbar of the module.
- The front portion or crossbar of the module stands in for the headliner panel in the front area of the roof of the vehicle. Thus, the roof headliner panel covers the side and rear areas of the roof of the vehicle.

The present invention has a series of advantages over the state of the art:
- Component integration. The front portion or crossbar of the module performs the function of a front crossbar of the protection system. In the known inventions, the protection system is an independent element which is assembled on the roof of the vehicle.
- Increase of the transparent area inside the vehicle. The integration of the front crossbar of the protection system makes the space for this crossbar unnecessary should the protection system be a separate piece. Thus, the protection system begins on the same edge of the front crossbar of the module, whereupon the opening area of the inner portion of the roof of the vehicle, and therefore the area corresponding with the transparent element, are increased.

Currently in motorized vehicles with a roof including a transparent element, there is a protection or shielding device inside the vehicle and opposite to said transparent element.

The final purpose of the protection device is to cover the area of the transparent element from inside the vehicle, such that it allows the occupants to gradually cover said transparent area.

The occupants can thus be protected from the outside solar radiation and from the atmospheric elements which may cause them discomfort. The protection must be able to be regulated from minimum protection, i.e. not covering the transparent element, up to maximum protection, which is covering the transparent element, any intermediate position being possible.

In the vehicle assembly line, the sheet metal carrying out the function of the roof is replaced with the transparent element, the structure of the vehicle thus being configured in the same way as in a normal assembly entirely of sheet metal.

In subsequent phases of the vehicle assembly line, the protection system and subsequently the headliner panel are added. These operations are carried out from inside the vehicle and, since this is an overhead assembly, it is carried out in difficult operating positions resulting in greater difficulty in assuring the quality of the end product.

A method for facilitating the assembly of the roof elements in vehicles with a transparent element is to group the pieces forming modules, which in turn are assembled prior to passing to the vehicle assembly line.

Thus, the assembly operations of a module are carried out under ideal conditions and with specific tools, which assures a simpler quality control.

Accordingly, the final assembly in the vehicle is the assembly of a single main piece, which shortens total vehicle assembly time and with the assurance of the components being correctly assembled in the assembly of the module, as has already been mentioned.

One aspect of the invention refers to a roof module for inside a vehicle having a first transparent roof portion and a second sheet metal roof portion. Said vehicles incorporate said first roof portion of glass or of other plastic materials, rather than the usual metal roof. The module of the invention comprises:
covering means:
   for covering the first portion;
   having a front end and a rear end;
   configured to occupy a position selected from:
      extended, wherein the first portion is covered;
      withdrawn, wherein the first portion is uncovered;
      intermediate, wherein the first portion is partially covered; support means for supporting the covering means having:
   at least one side portion comprising guide means for guiding the shifting of the covering means;
   a rear portion comprising the rear end of the covering means; operation means for shifting the covering means between the extended, withdrawn
   and intermediate positions;
wherein:
the support means comprise:
   a front portion comprising receiving means for receiving the front end of the covering means in the extended position.

The module will usually have two side portions, although the case may also occur in which only one side portion is needed.

In the module of the invention, the front portion is fixed to the second portion, through first fixing means located in a plurality of first locations.

The front portion can further comprise a plurality of sun visors, usually two, preassembled in said front portion. Said sun visors are preassembled through a plurality of attachment points, said attachment points being located in a plurality of second locations.

The front portion is likewise fixed to the second sheet metal portion of the roof of the vehicle through second fixing means located in a plurality of third locations.

In this case, the location of the second locations coincides with the location of the third locations for preventing overstraining in the fixing means when the sun visors are used.

On the other hand, the at least one side portion can be joined to the front portion.

The front portion of the module also comprises a joint for obtaining a closure with the front end of the covering means. Said joint can be configured to be assembled as a separate piece in the front portion, or it can be integrated in the front portion.

Optionally, the at least one side portion can be joined to the front portion by means of riveting of turrets of the front portion when said front portion is of a plastic material. The turrets are cylindrical configurations integrated in the front portion, and in the riveting, the upper portion of the turrets is flattened against the at least one side portion.

The operation means can be located in a position selected between the front portion and the rear portion.

In the module of the invention, the roof headliner panel portion can be constituted in one piece.

Alternatively, the roof headliner panel portion comprises two side headliner panel portions and one rear headliner panel portion, each side headliner panel portion and the rear headliner panel portion being constituted of one piece each. In this case, the side headliner panel portions can be of a thermoplastic material, whereas the rear portion can be of a material selected from fabric, thermoplastic and combinations thereof.

The front portion can further be joined to the roof headliner panel.

### Brief Description of the Drawings

A series of drawings will be very briefly described below which aid in better understanding the invention and which are expressly related to an embodiment of said invention shown as a non-limiting example thereof.

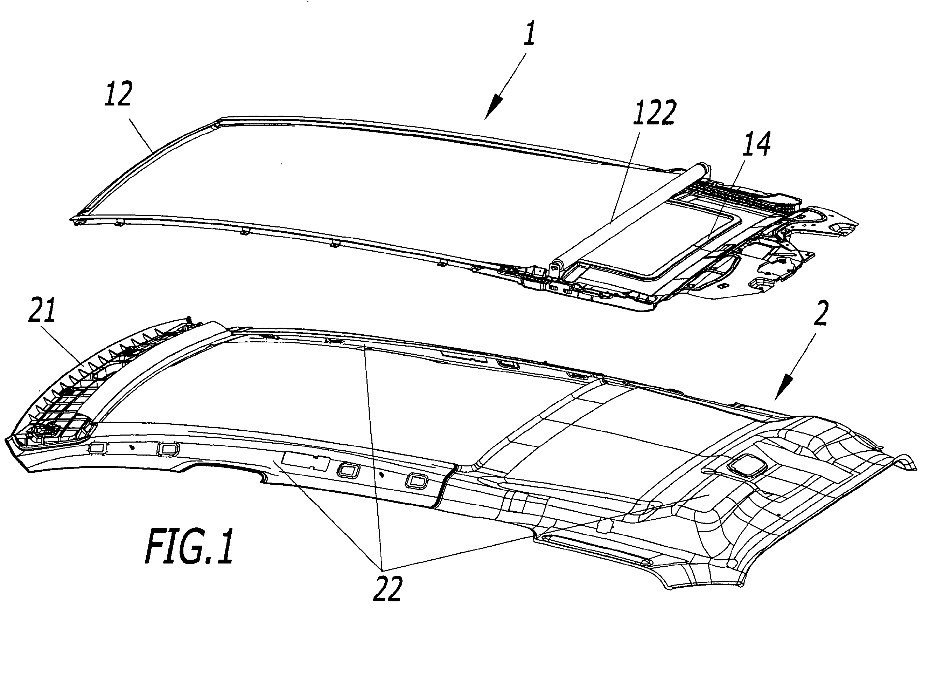

Figure 1 shows an exploded view of the module with a roll-up curtain protection system.

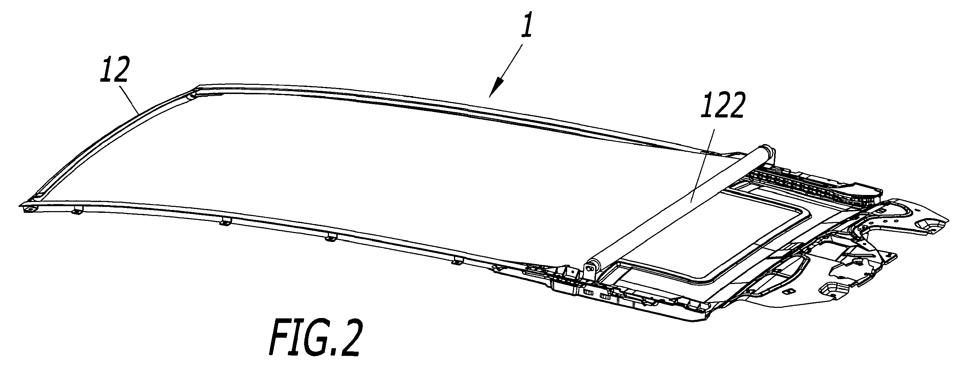

Figure 2 shows a perspective view of the roll-up curtain protection system

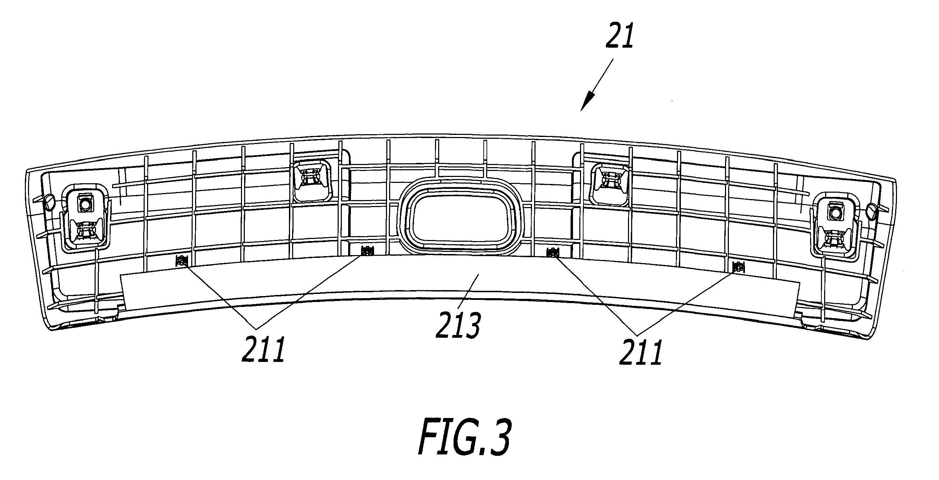

Figure 3 shows a frontal view of the non-visible face of the front portion or crossbar.

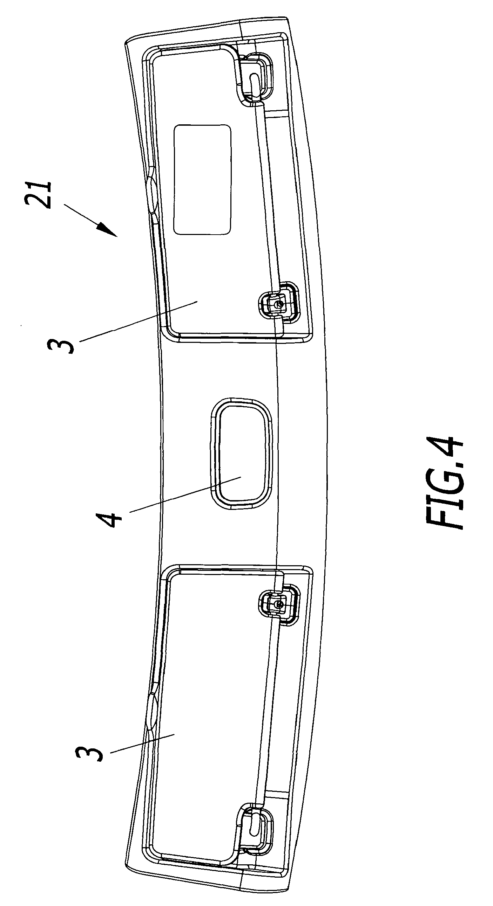

Figure 4 shows a frontal view of the visible face of the front portion or crossbar.

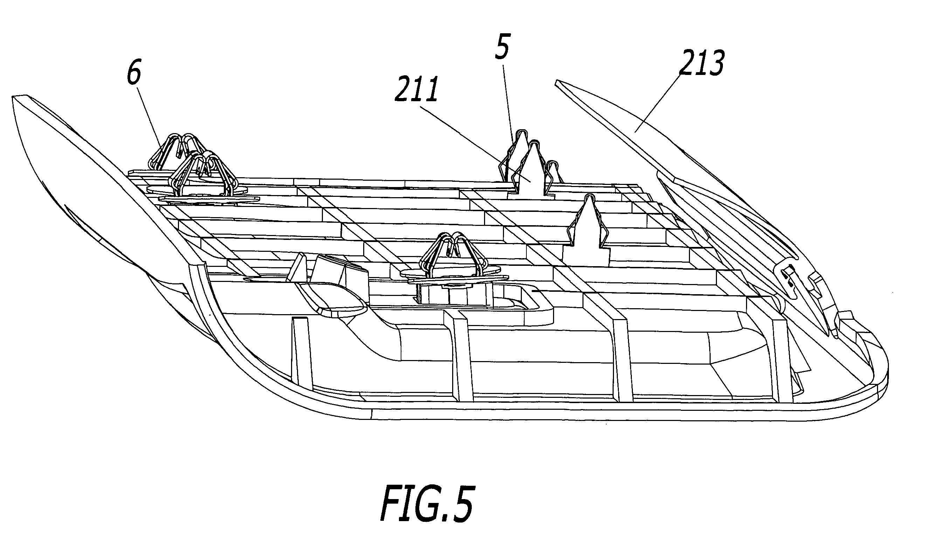

Figure 5 shows a side perspective view of the non-visible face of the front portion or crossbar.

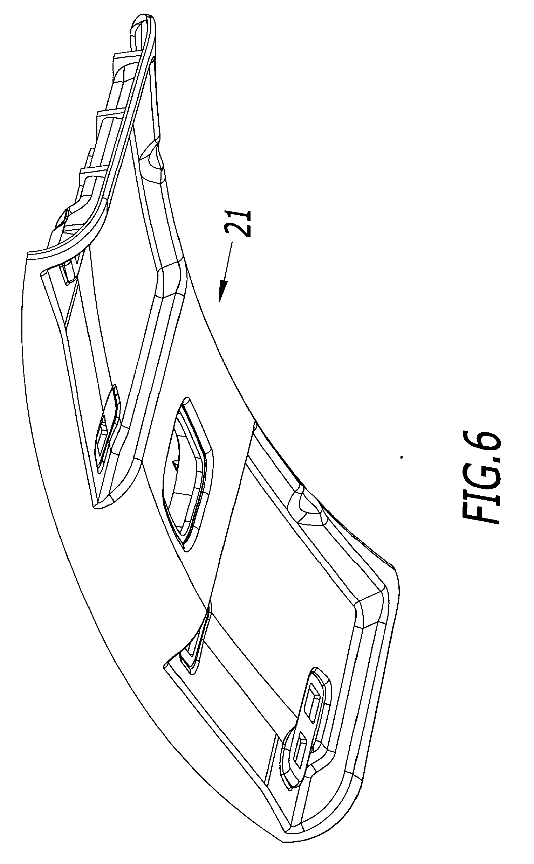

Figure 6 shows a perspective view of the visible face of the front portion or crossbar.

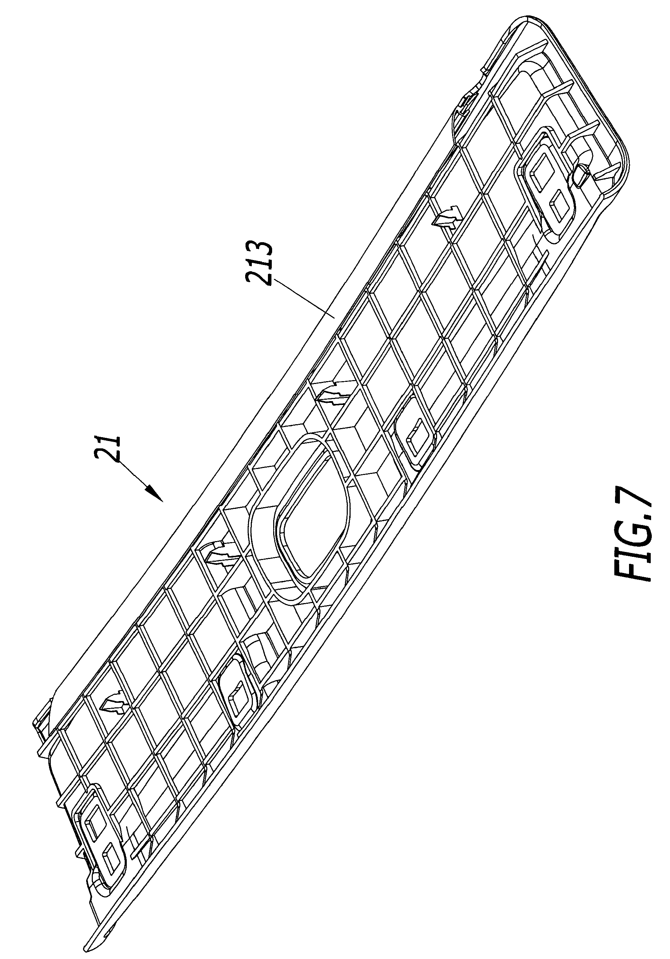

Figure 7 shows a perspective view of the non-visible face of the front portion or crossbar.

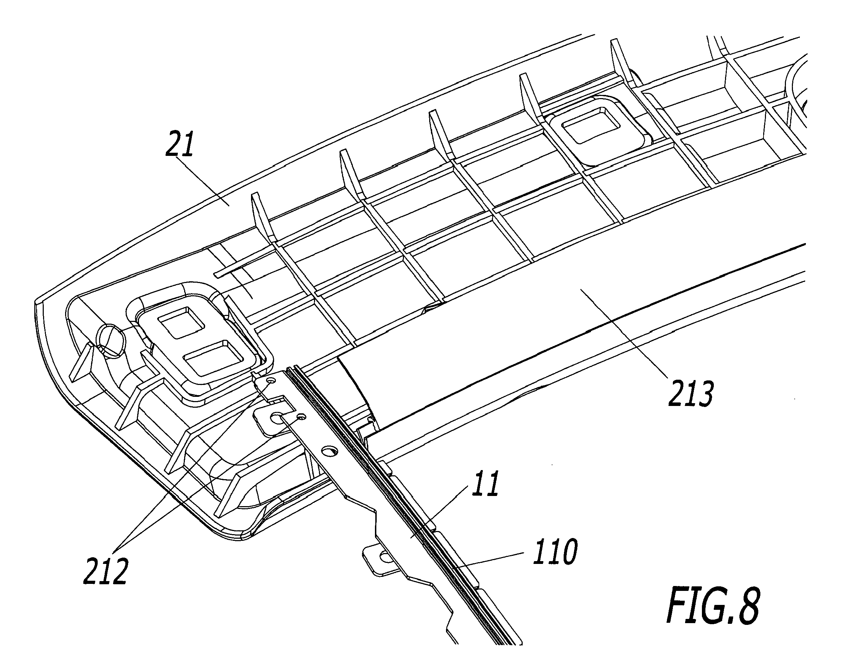

Figure 8 shows a detailed view of the fixing of the guide of the protection system in the front portion or crossbar.

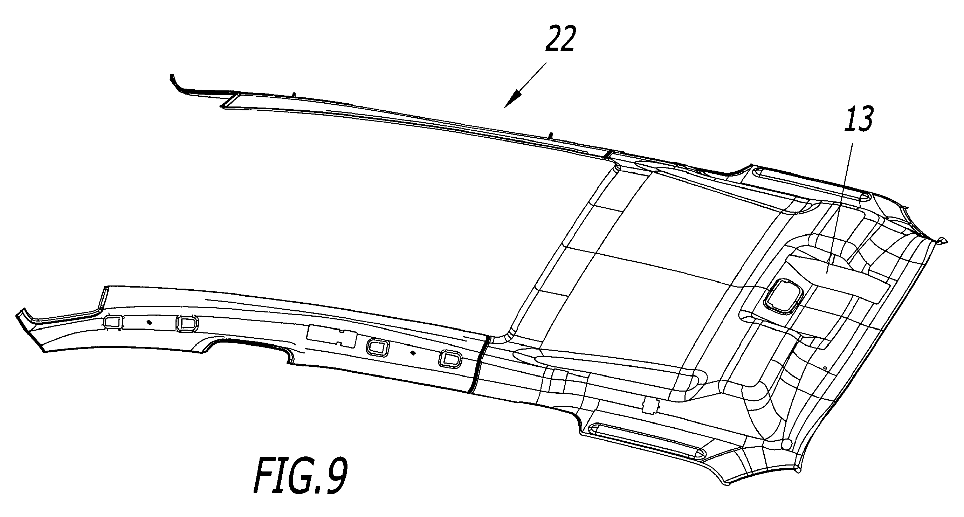

Figure 9 shows a perspective view of the non-visible face of the interior headliner panel.

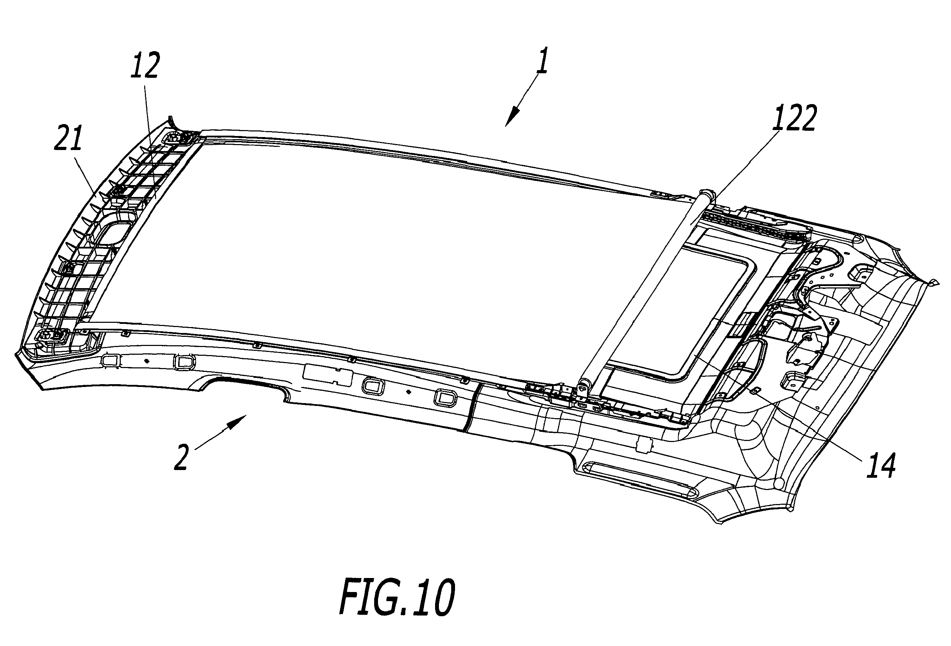

Figure 10 shows a perspective view of the module with a roll-up curtain protection system.

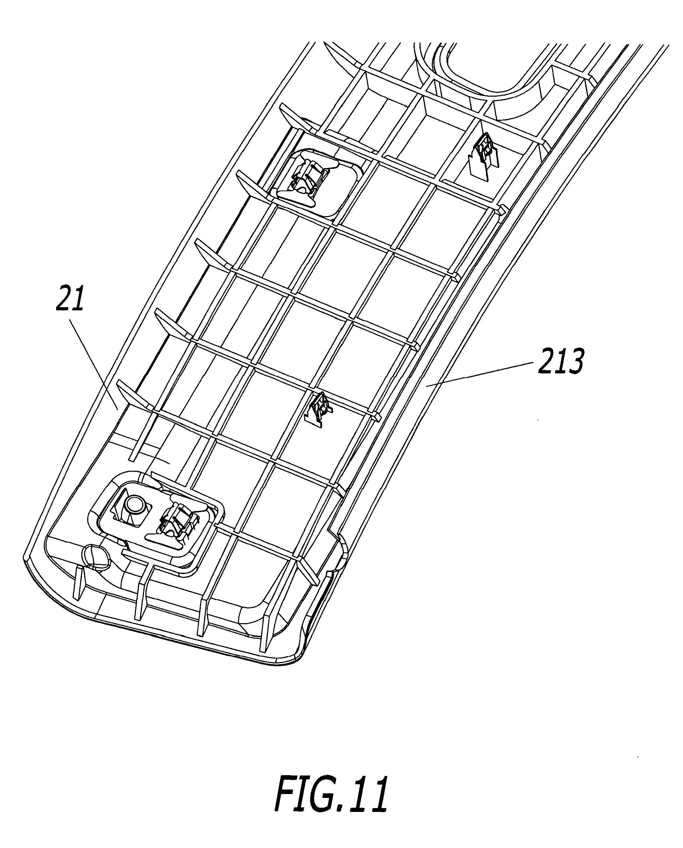

Figure 11 shows a perspective view of the non-visible face of the front portion or crossbar, indicating the sections shown in the previous figures.

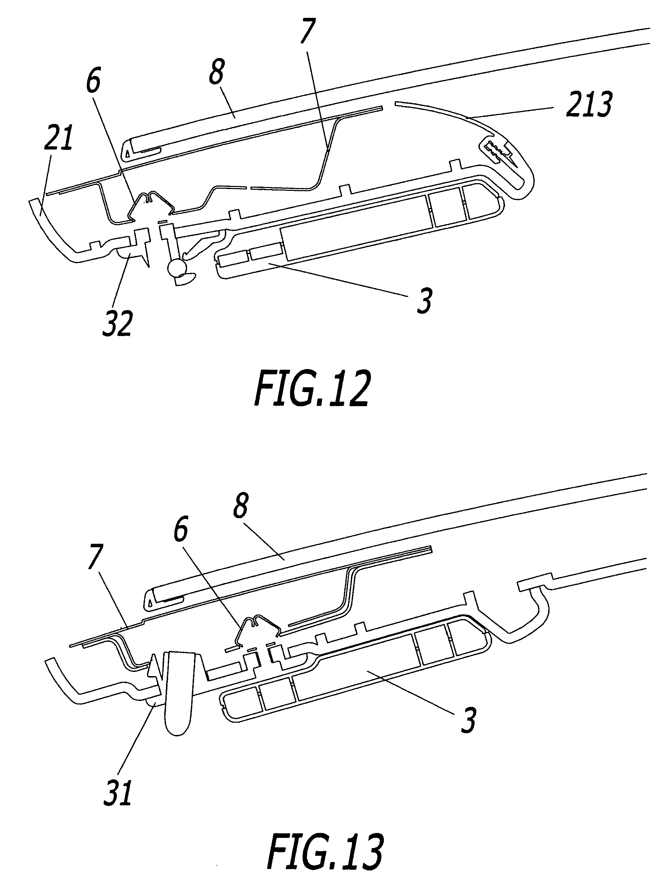

Figure 12 is the A-A cross section in the sun visor retainer.
Figure 13 is the B-B cross section in the sun visor joint.

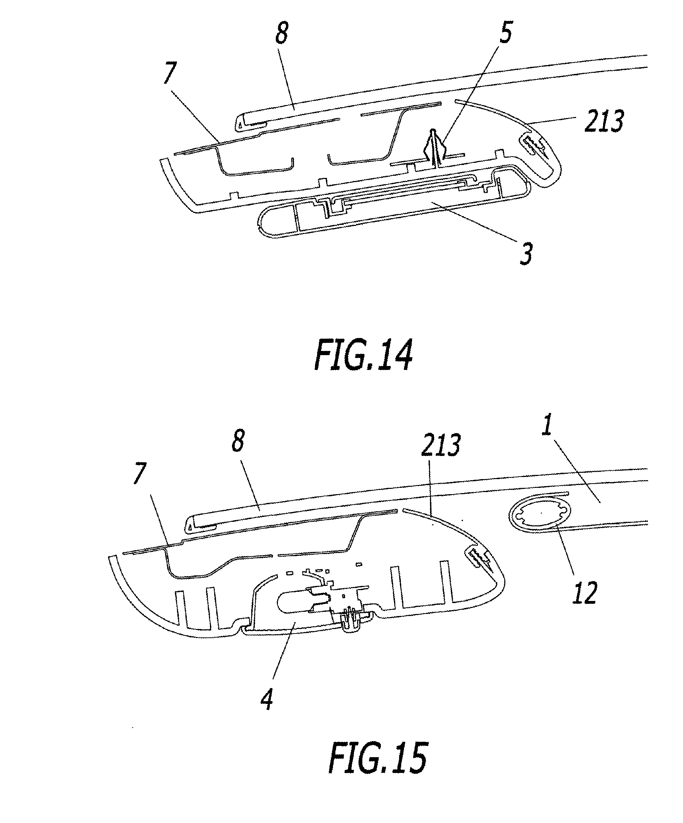

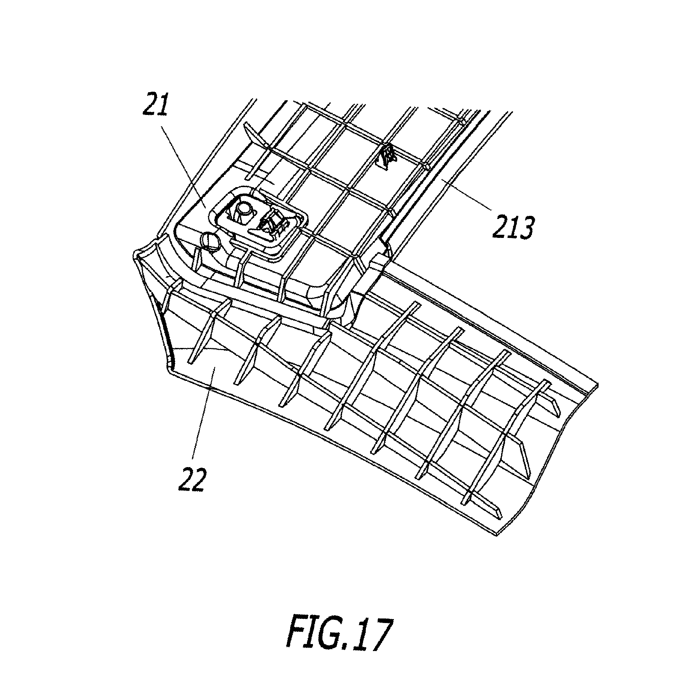

Figure 14 is the C-C cross section in the clips of the front portion or crossbar.
Figure 15 shows a cross section view in half of the front portion or crossbar, with the protection system withdrawn or in a not completely extended position.

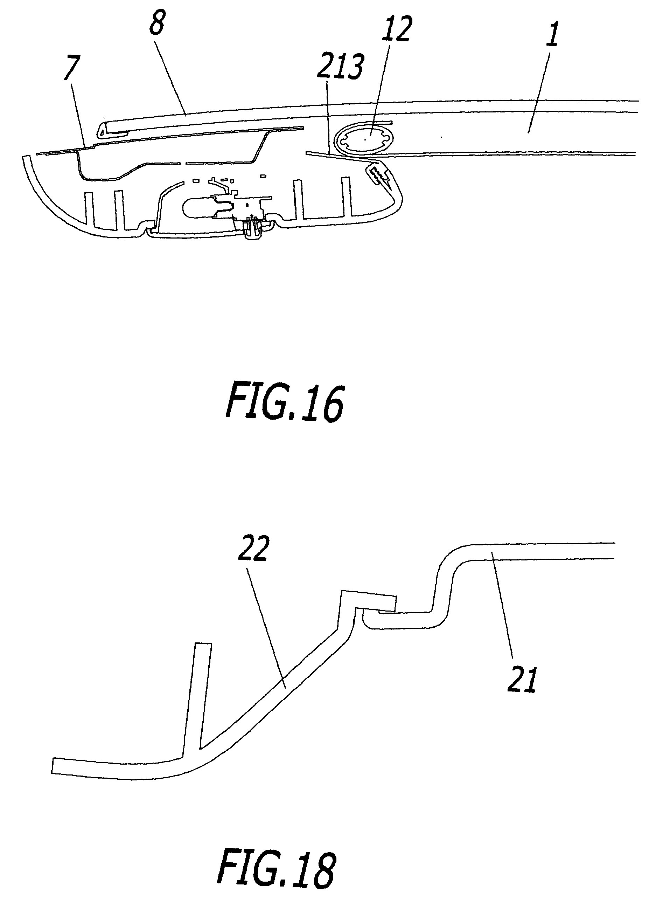

Figure 16 shows a cross view section in half of the front crossbar, with the protection system being advanced or in a completely extended position.
Figure 17 shows a perspective view of the non-visible face of the front portion or crossbar and headliner panel, indicating the section shown in the next figure.
Figure 18 shows the D-D section showing how the front portion or crossbar and the headliner panel are connected to one another.

### Description of a Preferred Embodiment of the Invention

An embodiment of said invention refers to a roof module made up of a protection system or covering means 1 with a roof headliner panel 2.

The protection system or covering means 1 is of the roll-up curtain type. This system consists of two side guides or guide means 110 through which the front rod 12 of the curtain slides. The operation means 13 are fixed in the rear portion or part 14 of the protection system. The operation means 13 could also be arranged in the front portion 21. In this embodiment, the rear portion or part 14 has the configuration shown given that it can serve both for said roll-up curtain and for a slat system, and also for manual or electric motor operation.

With the operation means 13 being integrally joined with the rear portion or part 14 of the protection system or covering means 1, the protection of the interior is carried out when extending, by unrolling, the curtain from the rear portion or part 14 of the vehicle towards the front portion or part 21 thereof. To withdraw the protection, the curtain is rolled up from the front portion or part 21 of the vehicle towards its rear portion or part 14.

In its simplest configuration, the roof headliner panel 2 is made up of a front portion or crossbar 21 and of the rest of the headliner panel 22 not including the front portion or crossbar 21 area.

The front portion or crossbar 21 consists of a plastic material piece integrating several elements and incorporating some pieces preassembled. Due to the integration of pieces and the geometry of the crossbar, its manufacture is preferably carried out by injection of a thermoplastic material.

This front portion or crossbar 21 has the geometry necessary for being adapted to the front portion of the roof of the vehicle. It further has configurations for positioning and fixing the crossbar, such as clip bearings 211, in which the metal clips 5 fixing it to the sheet metal portion 7 of the vehicle are fixed, and for securing the element assembly, such as turrets 212, in which the ends of the side portions 11 of the protection system or covering means 1 are fixed.

Another geometric feature of the front portion or crossbar 21 is that in the rear portion thereof, an elastic piece, a lip-shaped housing or receiving means 213, serving to house the front portion 12 of the protection system 1, are set. This housing carries out a closure against the entry of outside light and assures visual continuity between the front crossbar 21 and protection system 1.

In a variant of said embodiment, the lip or receiving means 213 could be part of the crossbar 21, being manufactured by injection, either of the same material or as an over-injection of another material.

This front portion or crossbar 21 has a bearing function, that is, it accommodates preassembled elements for carrying the assembly to its final assembly position. These elements are at least two sun visors 3 and a light console 4 in the center of the crossbar, being able to add other elements such as other light consoles, rearview mirror and the like. This bearing feature makes the front portion or crossbar 21 have a configuration such that it assures rigidity of the assembly until its final placement in the vehicle, being achieved by means of inner walls and ribs.

The sun visors 3 are supported on the front portion or crossbar 21 at two points: an articulation 31 allowing for the rotation of the sun visor, and a retainer 32 allowing for the release of the sun visor for the side protection function. Metal clamps 6 are joined in respective elements 31, 32 by means of screwing, which clamps are those which are fixed to the sheet metal of the vehicle 7 by means of clipping.

The front portion or crossbar 21 also integrates the front crossbar function of the protection system 1. The side portions 11, including the side guides or guide means 110 of the protection system or covering means 1, are fixed directly to the front portion or crossbar 21.

The stresses carried out on a sun visor 3 in its extending and withdrawal are comparatively much greater than those stresses borne by the front portion or crossbar 21 of a protection system or covering means 1. This means that the front portion or crossbar 21 must have the rigidity mentioned for bearing the elements and that necessary as a front portion or crossbar 21 of a protection system or covering means 1. Since the fixing of the sun visors 3 in the present invention is carried out directly to the sheet metal of the vehicle 7 by means of metal clamps 6, the necessary reinforcement of the front portion or crossbar 21 is avoided to a large extent, both at the geometric level by means of ribs and other configurations and at the level of the material.

The roof headliner panel 2 has the function of protecting the roof of the vehicle and the elements therein contained, such as the protection system or covering means 1, so that they are not visible from inside the vehicle. In the present invention, the front portion of the headliner panel is replaced with the front portion or crossbar 21. There is also the central opening for the protection system or covering means 1 corresponding with the size of the transparent element in the roof of the vehicle. The headliner panel 2 is thus in its simplest expression, constituted of a U-shaped configuration.

A headliner panel 2 variant is one in which the three segments of the U are different pieces. The two side segments are symmetrical and could be manufactured in a thermoplastic material by injection, integrating the fixing elements in a manner that is similar to how the side pillar headliner panels are constituted. That is, the rear portion of the headliner panel can be constituted of layers .of material, as in usual roof headliner panels manufactured by thermoforming.

The mentioned elements can be assembled outside of the vehicle, thus forming a bearing module for its final assembly, opposite to the transparent portion or element 8 of the roof of the vehicle.

The preferred embodiment set forth is made up of a protection system or covering means 1 and a headliner panel 2 with a front portion or crossbar 21. The front crossbar includes configurations for the fixing and positioning of elements, although the main securing is carried out by the fixing of the sun visors 3 to the sheet metal 7 of the vehicle. This front portion or crossbar 21 also has the function of closing and front portion of the protection system or covering means 1 and of front crossbar of said system. All these components can be preassembled, forming a module for its final assembly in the vehicle.

## Claims

1. A roof module for inside a vehicle having a first transparent roof portion (8) and a second sheet metal roof portion (7), said module comprising:
covering means (1):
for covering the first portion (8);
having a front end (12) and a rear end (122);
configured to occupy a position selected from:
extended, wherein the first portion (8) is covered;
withdrawn, wherein the first portion (8) is uncovered;
intermediate, wherein the first portion (8) is partially covered; support means (2, 21, 11, 14) for supporting the covering means (1) having:
at least one side portion (11) comprising guide means (10) for guiding the shifting of the covering means (1);
a rear portion (14) comprising the rear end (122) of the covering means (1); operation means (13) for shifting the covering means (1) between the extended,
withdrawn and intermediate positions;
wherein:
the support means (2, 21, 11, 14) comprise:
a front portion (21) comprising receiving means (213) for receiving the front end (12) of the covering means (1) in the extended position.

2. The module of claim 1, wherein the front portion (21) is fixed to the second portion (7) through first fixing means (5) located in a plurality of first locations.

3. The module of any of claims 1-2, wherein:
the front portion (21) further comprises a plurality of sun visors (3) preassembled in said front portion (21) through a plurality of attachment points (31, 32), said attachment points being located in a plurality of second locations;
the front portion (21) is fixed to the second portion (7) through second fixing means (6) located in a plurality of third locations;
the location of the second locations coincides with the location of the third locations to prevent overstraining in the fixing means (6) when the sun visors (3) are used.

4. The module of any of claims 1-3, wherein the at least one side portion (11) is joined to the front portion (21).

5. The module of any of claims 1-4, wherein the front portion (21) comprises a joint (213) for obtaining a closure with the front end (12) of the covering means (1).

6. The module of claim 5, wherein the joint (213) is configured to be assembled as a separate piece in the front portion (21).

7. The module of claim 6, wherein the joint (213) is integrated in the front portion (21).

8. The module of claim 4, wherein the at least one side portion (11) is joined to the front portion (21) by means of the riveting of turrets (212) of the front portion (21).

9. The module of any of claims 1-8, wherein the operation means (13) are located in a position selected between the front portion (21) and the rear portion (14).

10. The module of any of claims 1-4, wherein the headliner panel portion (22) is constituted in one piece.

11. The module of any of claims 1-4, wherein:
the headliner panel portion (22) comprises two side headliner panel portions (220) and one rear headliner panel portion (224);
each side headliner panel portion (220) and the rear headliner panel portion (224) are each constituted of a single piece.

12. The module of claim 11, wherein the side headliner panel portions (220) are of a thermoplastic material.

13. The module of claim 11, wherein the rear headliner panel portion (224) is of a material selected from fabric, thermoplastic and combinations thereof.

14. The module of any of claims 1-13, wherein the front portion (21) is joined to the roof headliner panel (2).
